# EUROPEAN PATENT APPLICATION

(11) **EP 2 874 420 A1**
(43) Date of publication of application: **20.05.2015**
(21) Application number: 14188857.8
(22) Date of filing: 14.10.2014
(51) Int. Cl.: H04W 8/06

(54) **SELECTING IMSI AND PROVIDER OPERATOR BASED ON PREFERENCES STORED IN A SIM**

(30) Priority: 23.10.2013 GB 201318744
(71) Applicant: Towers-Clark, Charles, London SW7 3QB (GB)
(72) Inventor: Towers-Clark, Charles, London SW7 3QB (GB)
(74) Representative: Skinner, Michael Paul

(57) **Abstract**

A mobile telecommunication device is provided with a table which includes rows of entries for use when roaming outside the home country. The entries are provided with an order of preference, indicated by the order of columns in the table. An entry may specify a subscriber identity (IMSI 1, IMSI 2 etc.) and a local network (Voda, Telfort etc.), or only a subscriber identity. When roaming, a device will seek to establish a satisfactory connection using the subscriber identity and local network specified by the first preference entry for the roaming country. If a satisfactory connection cannot be achieved, the next most preferred table entry is read to obtain an alternative selection of subscriber identity and local network. At least one group of entries (e.g. for Netherlands) specifies two different subscriber identities (IMSI 1, IMSI 2). Specifying multiple subscriber identities and multiple local networks in the group of entries improves reliability by allowing a satisfactory connection to be achieved from another local network, if a specified local network is not available and allows an alternative subscriber identity from an alternative home network to be used, in the event that a failure in a home network prevents the establishment of a connection.

## Description

The present invention concerns improvements in or relating to mobile telecommunications.

Mobile telecommunication devices include mobile phones, mobile data devices and other devices. These devices are able to establish connections for communication by using wireless networks. When the device is within range of a wireless network, the device will seek to establish a connection for communication and once this has been established, communication for speech or data is then available through the wireless network. The wireless network may itself be connected with other wireless or non-wireless networks as part of a wider communications system, allowing the device to communicate with destinations within any of these networks. The freedom with which a device can establish and use connections will be affected by commercial agreements between users and network operators, and between the operators of the various networks.

In particular, a user of the GSM (Global System for Mobile Communications) cellular telecommunications system will have a commercial arrangement with a network operator, who operates a wireless network designated the "home network" for that user. The network operator will have commercial arrangements with operators of other networks, in order to allow a user to use those other networks when out of range of the home network (known as "roaming"). The other network is then known as the "local network". The cost of using services when roaming will depend on the commercial arrangements between the various network operators and between the user and their home network operator. The quality of services available while roaming is affected by the choice of local network. Accordingly, there exists a need to improve the manner in which connections are established and used, in order to optimise or improve the manner in which the system is used.

Examples of the present invention provide a method of operating a mobile telecommunications device in a telecommunications system to establish a connection for communication through the system, the system including a plurality of wireless networks, and the device being operable to establish a connection by means of a network locally available to the device and by using a subscriber identity to identify the device user and a home network for the device, wherein a table of selection data is stored on the device, the table having a plurality of entries and the entries having a preferred order, and each entry including at least a subscriber identity, and wherein the device is operable, in the absence of a connection, to attempt to establish a connection by:
reading a table entry to identify selection data which includes a subscriber identity specified in the table entry and which includes a local network if a local network is specified in the table entry;
attempting to establish a connection using the specified subscriber identity and, if any, the specified local network, and any available local network if no local network is specified;
determining if a satisfactory connection is available and if so, maintaining the connection and if not, reading the next most preferred table entry to obtain alternative selection data as aforesaid, and attempting to establish a connection using the alternative selection data;
and wherein the table comprises at least one group of entries for use when the device is located in a country corresponding to the group, the group including at least a first entry which specifies a first subscriber identity from a first home network, and a second entry which specifies a second subscriber identity from a second home network.

There may be a plurality of groups of entries for use when the device is located in respective ones of a corresponding plurality of countries. There may be more than one group which includes entries specifying subscriber identities from different home networks.

There may be at least one group corresponding to a roaming country which is not the home country for at least one subscriber identity available for use by the device. There may be at least one group corresponding to a roaming country which is not the home country for all or substantially all of the subscriber identities available for use by the device. At least one group may include a first entry which specifies a first subscriber identity from a first home network outside the corresponding country and a second subscriber identity from a second home network outside the corresponding country.

A satisfactory connection may be determined as meeting a minimum performance standard. The minimum performance standard may relate to data transmission. In one example, a network is not designated as locally available unless a minimum threshold of a parameter for measuring quality is met for communication between the device and the local network. The parameter may relate to data transmission.

Once a connection has been established, the current connection may continue to be used for a minimum period. After the minimum period has elapsed, the current connection may be reassessed and the table of selection data used to establish an alternative connection in the event that a connection is determined to be unsatisfactory when reassessed and/or in the event that a connection is available on the basis of a more preferred table entry than the current connection.

The table may include groups of entries which specify combinations of subscriber identity and network formed from more than one subscriber identity and/or more than one network. The combinations may include the combination of one subscriber identity with each of a plurality of networks. The combinations may include the combination of one network with each of a plurality of subscriber identities. The combinations may between them specify more than one network and more than one subscriber identity.

At least one table entry may specify a subscriber identity without specifying a network. The network locally available providing the highest quality connection may be used when a table entry does not specify a local network to be used.

At least one table entry may designate a network as being not for use. At least one table entry may include at least one parameter defining functionality which must, can or must not be used when a connection is established on the basis of that entry. The parameter or parameters may define services to be available or blocked, and/or network standards to be used or not used, and/or addresses which are to be permitted or blocked during use.

At least one group of entries may identify at least two subscriber identities related to respective home networks which are independent of each other.

Examples of the present invention also provide a subscriber identity module for use in operating a mobile telecommunications device in a telecommunications system to establish a connection for communication through the system, the system including a plurality of wireless networks, and the device being operable to establish a connection by means of a network locally available to the device and by using a subscriber identity stored in the subscriber identity module to identify the device user and the home network of the device, wherein the subscriber identity module contains a table of selection data, the table having a plurality of entries and the entries having a preferred order, and each entry including at least a subscriber identity, and wherein the module is operable to provide selection data to the device to establish a connection by:
reading a table entry to identify selection data which includes a subscriber identity specified in the table entry and which includes a local network if a local network is specified in the table entry;
providing the selection data to the device for the device to establish a connection using the specified subscriber identity and, if any, the specified local network, and any available local network if no local network is specified;
and in response to the device determining that a satisfactory connection is not available, reading the next most preferred table entry to obtain alternative selection data as aforesaid, and providing the alternative selection data to the device;
and wherein the table comprises at least one group of entries for use when the device is located in a country corresponding to the group, the group including at least a first entry which specifies a first subscriber identity from a first home network, and a second entry which specifies a second subscriber identity from a second home network.

There may be a plurality of groups of entries for use when the device is located in respective ones of a corresponding plurality of countries. There may be more than one group which includes entries specifying subscriber identities from different home networks.

There may be at least one group corresponding to a roaming country which is not the home country for at least one subscriber identity available for use by the device. There may be at least one group corresponding to a roaming country which is not the home country for all or substantially all of the subscriber identities available for use by the device. At least one group may include a first entry which specifies a first subscriber identity from a first home network outside the corresponding country and a second subscriber identity from a second home network outside the corresponding country.

The table may include groups of entries which specify combinations of subscriber identity and network formed from more than one subscriber identity and/or more than one network. The combinations may include the combination of one subscriber identity with each of a plurality of networks. The combinations may include the combination of one network with each of a plurality of subscriber identities. The combinations may between them specify more than one network and more than one subscriber identity.

At least one table entry may specify a subscriber identity without specifying a network.

At least one table entry may designate a network as being not for use. At least one table entry may include at least one parameter defining functionality which must, can or must not be used when a connection is established on the basis of that entry. The parameter or parameters may define services to be available or blocked, and/or network standards to be used or not used, and/or addresses which are to be permitted or blocked during use.

At least one group of entries may identify at least two subscriber identities related to respective home networks which are independent of each other.

Examples of the present invention also provide a data structure for use in operating a mobile telecommunications device in a telecommunications system to establish a connection for communication through the system, the system including a plurality of wireless networks, and the device being operable to establish a connection by means of a network locally available to the device and by using a subscriber identity stored in the subscriber identity module to identify the device user and the home network of the device, wherein the data structure includes a table of selection data, the table having a plurality of entries and the entries having a preferred order, and each entry including at least a subscriber identity, and wherein the selection data is available to the device to establish a connection by:
reading a table entry to identify selection data which includes a subscriber identity specified in the table entry and which includes a local network if a local network is specified in the table entry;
using the selection data to establish a connection using the specified subscriber identity and, if any, the specified local network, and any available local network if no local network is specified;
and in response to the device determining that a satisfactory connection is not available, reading the next most preferred table entry to obtain alternative selection data as aforesaid;
and wherein the table comprises at least one group of entries for use when the device is located in a country corresponding to the group, the group including at least a first entry which specifies a first subscriber identity from a first home network, and a second entry which specifies a second subscriber identity from a second home network.

There may be a plurality of groups of entries for use when the device is located in respective ones of a corresponding plurality of countries. There may be more than one group which includes entries specifying subscriber identities from different home networks.

There may be at least one group corresponding to a roaming country which is not the home country for at least one subscriber identity available for use by the device. There may be at least one group corresponding to a roaming country which is not the home country for all or substantially all of the subscriber identities available for use by the device. At least one group may include a first entry which specifies a first subscriber identity from a first home network outside the corresponding country and a second subscriber identity from a second home network outside the corresponding country.

The table may include groups of entries which specify combinations of subscriber identity and network formed from more than one subscriber identity and/or more than one network. The combinations may include the combination of one subscriber identity with each of a plurality of networks. The combinations may include the combination of one network with each of a plurality of subscriber identities. The combinations may between them specify more than one network and more than one subscriber identity.

At least one table entry may specify a subscriber identity without specifying a network.

At least one table entry may designate a network as being not for use. At least one table entry may include at least one parameter defining functionality which must, can or must not be used when a connection is established on the basis of that entry. The parameter or parameters may define services to be available or blocked, and/or network standards to be used or not used, and/or addresses which are to be permitted or blocked during use.

At least one group of entries may identify at least two subscriber identities related to respective home networks which are independent of each other.

Examples of the present invention will now be described in more detail, by way of example only, and with reference to the accompanying drawings, in which:
Fig. 1 is a simplified schematic diagram of a conventional arrangement which includes provision for roaming;
Fig. 2 is a simplified schematic diagram of an arrangement in accordance with an example of the invention;
Fig. 3 is a simplified diagram of a mobile device;
Figs. 4 and 5 illustrate example tables used in examples of the invention; and
Fig. 6 is a flow diagram of a process of an example of the invention.

### Background

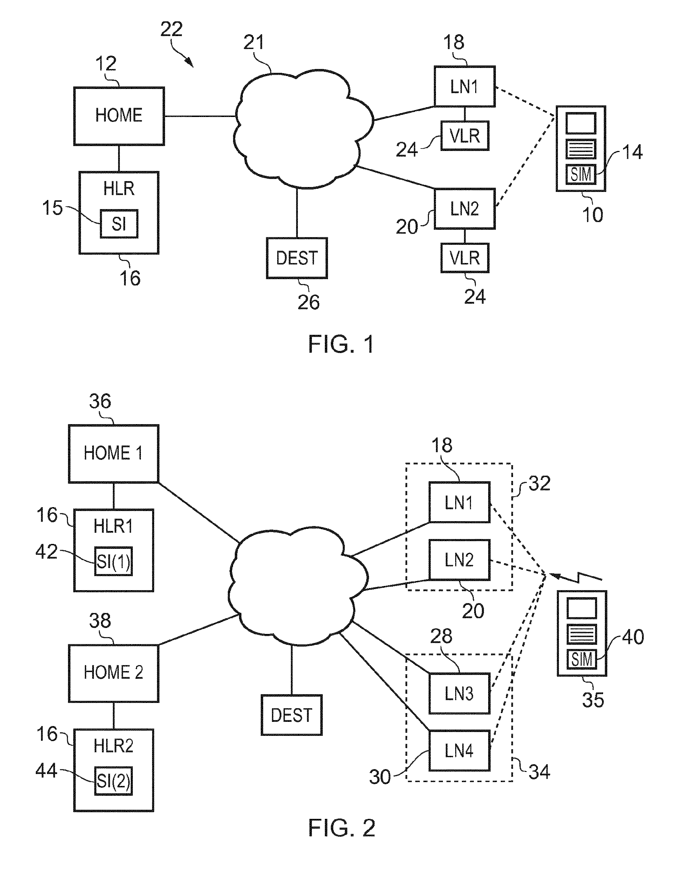

Fig 1 is a highly simplified schematic diagram illustrating some of the arrangements involved in providing facilities, including roaming, for the user of a mobile telecommunications device within the GSM telecommunications system.

In Fig 1, a user device 10 is associated with a home network 12. That is, the user of the device 10 has a commercial arrangement with the network operator of the network 12, allowing for billing, for example. The device 10 is a generic device which is personalised by installing a subscriber identity module or SIM 14. The module 14 contains data which identifies the home network 12 and the user of the device 10. These form part of the International Mobile Subscriber Identity (IMSI), which is a unique identifier used to identify the device 10 when another device wishes to communicate with the device 10. The subscriber identity details relating to the module 14 are stored at 15 within a home location register (HLR) 16 associated with the home network 12, to allow for billing and other processes.

When the device 10 is out of range of the home network 12, the device 10 may be within range of one or more other wireless networks 18, 20. The networks 18, 20 are known as local or visited networks because they are available locally at the current location of the device 10. The networks 12, 18, 20 are interconnected at 21 to form a telecommunication system 22. If the device 10 determines that the home network 12 is not available to it but one of the local networks 18, 20 is available, the device 10 will initiate the process for establishing a connection for communication through the system 22 by registering with one of the local networks 18, 20. For the purposes of this description, let it be assumed that the device 10 registers with local network 18. Local network 18 then identifies the home network 12 from the information within the module 14. For this purpose, the module 14 provides the IMSI, which identifies the home network 12 and the user. If the local network 18 determines that no roaming agreement exists between the networks 12, 18, service is denied to the device 10. Otherwise, the local network 18 contacts the home network 12 to seek authorisation to allow the device 10 to use the network 18 and in particular, for the network operator 18 to bill the network 12 for the use of those services. Once all of these checks have been satisfactorily completed, the local network 18 makes an entry in its Visitor Location Register (VLR) 24. The home network 12 will update the HLR 16 to record that the device 10 is currently roaming on the network 18, so that any information to be sent to the device 10 from the home network 12 can be routed correctly, via the local network 18. The device 10 then has an established connection in the system 22 and is able to communicate through the system 22, for example by communicating with a destination 26.

In the event that the device 10 changes location or otherwise loses the services of the network 18, the device 10 may seek to register with an alternative network, such as the local network 20, using the same process described above.

### Overview of improved arrangements

Fig 2 is a schematic diagram which is highly simplified in a manner similar to Fig 1, showing arrangements which can be used in accordance with an example of the invention being described.

In Fig 2, four local networks 18, 20, 28, 30 are illustrated. The choice of four is sufficient to illustrate an example of the invention but is not intended to limit the scope of the invention. The four networks 18, 20, 28 and 30 are considered in this example to be located in two different countries. Thus, local networks 18, 20 are located in country 32, while local networks 28, 30 are located in country 34. Thus, when the mobile device 35 is in country 32, network 18 and/or network 20 may be available, but not networks 28 and 30. Conversely, when the device 35 is in country 34, networks 28 and 30 may be available, but not networks 18, 20.

It is to be particularly noted that in Fig 2, there are two networks 36, 38, both identified as a "home" network. The choice of two is sufficient to illustrate an example of the invention, but there may be more. Each home network 36, 38 has an associated HLR 16 which can function as described above. In the example being described, the device 35 contains a subscriber identity module 40 which contains more than one IMSI (two IMSIs in this example). The reason for this will become apparent below. One of the two IMSIs is associated with each of the home networks 36, 38 and therefore the HLR 16 of home network 36 records a first IMSI 42, and the HLR 16 of home network 38 records the second IMSI 44.

The home networks may be in the same or different countries. One or more of the local networks may be in the same country as one or more of the home networks, e.g. for use when out of range of the home networks.

### Device for use in the system of Fig 2

The device 35 may be an otherwise conventional, generic device like the device 10. The device 35 is adapted for use in accordance with the examples being described by the installation of the module 40. Consequently, the device 35 requires only a brief description, as follows.

The device 35 incorporates a processor 46 with associated memory 48 and operating under software control. The device 35 is able to initiate wireless communication by means of a transceiver arrangement 50. A display 52 is provided for the user and there is a user interface 54 which may be a physical interface in the form of a keyboard or the like, or a graphical user interface provided on the display 52. A combination of these forms and other forms of interface could be used. Software provides instructions for the processor 46, to cause the processor 46 to execute the appropriate operations to perform the method described below. The software may be delivered to the device by wireless or wired communication, or by means of a storage medium (which may be the subscriber identity module). The software may be stored on the subscriber identity module or elsewhere in the device.

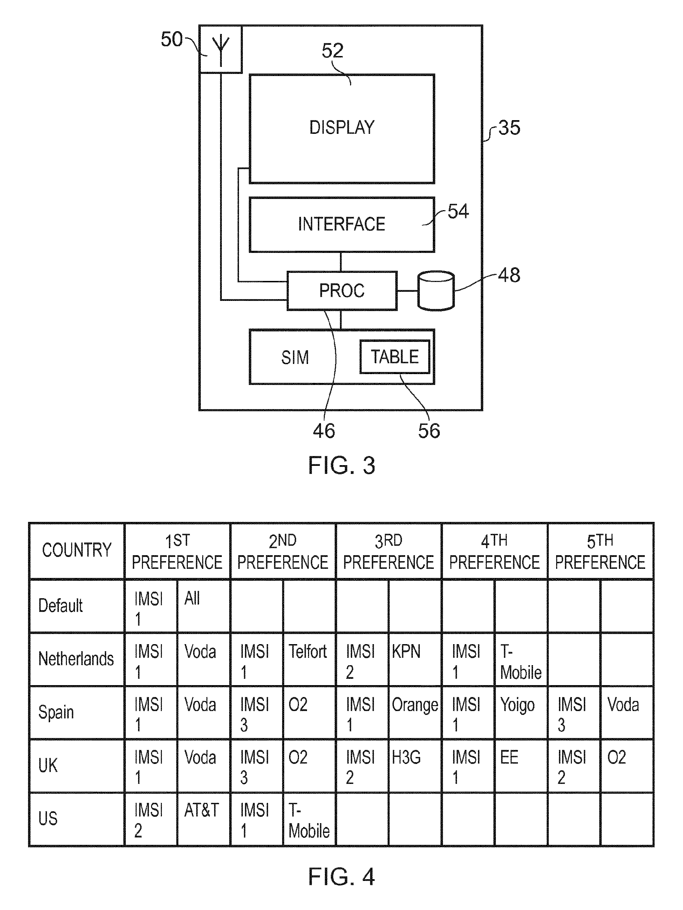

The processor 46 is also in communication with the module 40 installed in the device 35. The module 40 contains conventional features of a subscriber identity module for use in the GSM system, and also incorporates a table 56 shown in more detail in Fig 4. The table contents shown in Fig 4 are given only by way of illustration and are not intended to restrict the scope of the invention being described. The table shown in Fig 4 has a first column which is a list of countries, each serving as a label for one row of the table. These are preceded by a "default" row. Each row includes at least one column, and mostly several columns, labelled "first preference", "second preference" etc. Each entry in the table includes at least a subscriber identity in the form of an IMSI and in most cases, also includes the identity of a network eg "Voda", "Telfort" etc. In each row of the table, the entries have a preferred order indicated by the preference labels at the head of each column. Each row of the table provides a group of entries and can be considered as a sub-table of the table 56, corresponding with the respective country indicated in the first column. It can be seen that across the whole table 56, the table identifies IMSI 1, IMSI 2 and IMSI 3. Thus, the table 56 identifies three subscriber identities in this example and it is preferred that at least two subscriber identities are identified, related to respective home networks. When three different IMSIs appear in the table 56, a third home network would exist in the system of Fig 2.

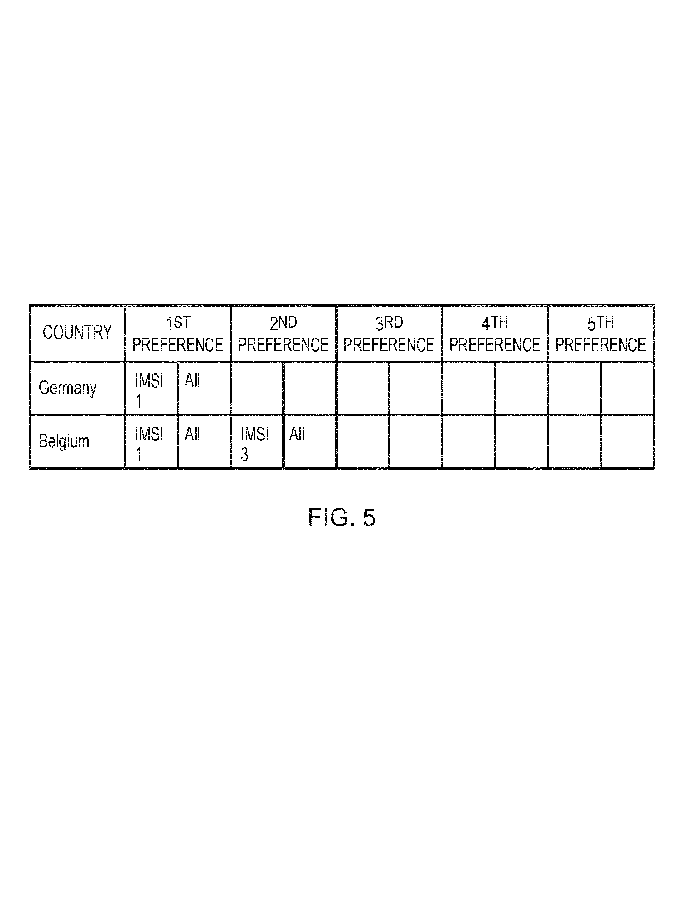

Fig 5 illustrates two lines which could form part of an alternative table, or which could alternatively be incorporated in the table of Fig 4. In this example, there is again more than one IMSI mentioned in the table, but no networks are identified. The significance of this will become apparent.

The processor 46 has access to the table 56 within the module 40 and can therefore read the table entries. This allows the processor 46 to identify data, here called "selection data", which includes a subscriber identity specified in the table entry as an IMSI. The selection data will also include the identification of any network specified in the table entry.

### Method of operation

In this document, a "country" is a geographic region having a distinct country code, such as the MCC in the GSM system.

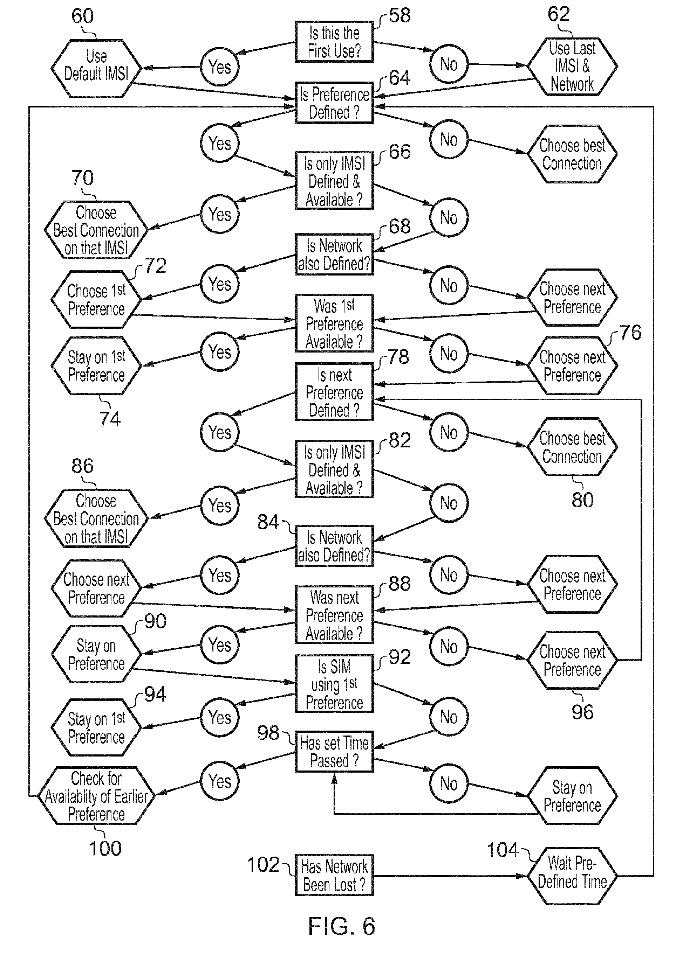

The method of operation of the device 35 in order to establish a connection for communication can now be described in more detail, with reference to Fig 6. The first step 58 shown in Fig 6 is preceded by steps (not shown) in which the device 35 identifies the country of its current location. This can be done by listening to an available network and obtaining the country code (MCC) of that network. The device 35 determines at 58 if this is the first time the device 35 has been used in this country and if so, initially retrieves the default IMSI at 60 for use in establishing a connection. In this example, the default IMSI is defined as IMSI 1 in the top row of the table 56. If the device determines at 58 that the device 35 was last used in this country, the IMSI and network selection last used will be recovered at 62.

The processor 46 then determines if the table 56 contains a preference. This is done by looking at the row corresponding with the country in which the device 35 is currently located. If so, does the preference only specify an IMSI (step 66) or is there also a network defined (step 68)? In the table of Fig 4, every entry specifies a network (with the exception of the default), whereas in the table of Fig 5, no networks are specified. If an IMSI is specified, but no network, the device 35 listens for the strongest available network signal (70) and undertakes a registration process of the type described above, using the preferred IMSI and the network which is locally available and capable of providing the highest quality connection.

If a network is also defined in the table entry (such as "Voda" in the case of the first preference in the Netherlands), the device 35 seeks to establish a connection using the preferred combination of IMSI and network (at 72). The device 35 may first check that the quality of communication available between the device 35 and the local network exceeds a minimum threshold, before designating the local network as available. If a satisfactory connection (as discussed below) is available with this combination of IMSI and network, the device 35 will maintain this connection (at 74). The quality of a connection may be assessed by using the ECHO command, or in another way. If the network is not available, or a satisfactory connection cannot be obtained for any other reason, the processor 46 consults the memory 48 again to obtain the next most preferred table entry. Thus, when located in the Netherlands, the second preference would be the combination of IMSI 1 and the Telfort network. This is step 76.

Step 78 determines if the end of the list of preferences has been reached, so that there is no next preference defined in the table 56. If so, the strongest available connection is selected at 80.

If there is a next preference in the table 56, the processor 46 checks at 82 to see if only the IMSI is defined, or whether the network is also defined (at 84). If only an IMSI is defined, the strongest connection available on that IMSI is selected at 86. If an IMSI and the network are both defined by the table entry, the device 35 seeks to establish a connection at 88 and if a satisfactory connection is available with this preference, the device 35 establishes a connection and keeps that connection open at 90. The processor 46 determines at 92 whether or not the first preference has been chosen and successfully used, in which case the device will stay on this preference (94).

However, if the preference is determined at 88 to be not available, the next preference is chosen at 96 by moving one step to the right in the list of preferences set out in one row of the table of Fig 4. The process then loops back to step 78.

If step 92 determines that the most preferred IMSI or the most preferred combination of IMSI and network failed to achieve a satisfactory connection, so that a connection has been established using a lower preference than the first preference, the processor 46 maintains the current connection for a set period of time (at 98). The set period of time may be, for example, 24 hours. After the set period of time has elapsed, the processor 46 will check at 100 for the availability of higher preferences from the table. This is achieved by the method looping back to step 64 in order to identify the most preferred entry in the table (a combination of IMSI and network, or an IMSI alone) and then stepping through the process again, to see if it is possible to establish a satisfactory connection using an entry which is more preferred than the entry which is currently in use.

Finally, the processor 46 is able to respond to the loss of a connection at 102 by waiting for a second set period of time (at 104) before stepping back to step 64.

The purpose of the periods of time set at 98 and 104 is to minimise the risk that the device 35 will seek to swap connections with undue frequency. In the absence of these delays, frequent reassessment and swapping could occur, which is likely to cause significant battery drain in a portable device and is particularly likely to happen in an area where signals are marginal. Frequent reassessment and swapping is also likely to cause disruption in data services.

### Significance of the arrangements

It can be seen from the above description that the device 35 will attempt to establish a connection by reading a table entry from the table of Fig 4 to identify selection data which includes a subscriber identity specified in the table entry (such as an IMSI) and which also includes a local network if a local network is specified in the table entry. The device 35 will then attempt to establish a communication connection using the specified subscriber identity and, if any, the specified local network, and any available local network if no local network is specified in the table. The device will then determine if a satisfactory connection is available and, if so, maintain the connection and, if not, read the next most preferred table entry to obtain alternative selection data as aforesaid, to attempt to establish a connection using the alternative selection data.

The table comprises at least one group of entries for use when the device is located in a country corresponding to the group. In Fig. 4, the table comprises groups (rows) for use when in Netherlands, Spain, U.K. and U.S. These countries may be the home country for one or more of the subscriber identities, or may be roaming countries for one or more of the subscriber identities. A "roaming" country is a country other than the home country defined by a particular subscriber identity. At least one of the groups includes a first entry which specifies a first subscriber identity from a first home network (which may be in the current country or outside), and a second entry which specifies a second subscriber identity from a second home network (which may be in the current country or outside). For example, the group shown in Fig. 4 for use when in Netherlands includes entries specifying IMSI 1 and IMSI 2. The group for use in Spain specifies IMSI 1 and IMSI 3.

It is important to note that each entry in the table includes a subscriber identity, shown as an IMSI. Consequently, the IMSI shown in an entry can be different to the IMSI shown in a different (preceding or following) entry. When the device 35 arrives in any new country, the device will identify the country in which it is located, as noted above, and then check the table (Fig 4 or Fig 5) for the appropriate IMSI shown in the first preference in the corresponding sub-table for that country (the appropriate row of the table). If a network is specified in that entry, the device will attempt to establish a connection using the specified combination of IMSI and network. If there is no coverage available on that network, the device will move to the next preference and will keep moving down the list of preferences for that country until an available IMSI/network combination is found, or the list of preferences is exhausted. If the first (or any) preference in the list specifies the IMSI but no network, the device will assess which local network can provide the best connection and seek to establish a connection by means of that combination of IMSI and network.

Consequently, it can be seen that if the device 35 is seeking to establish a connection by using a particular combination of IMSI and network, then several possible outcomes may arise. First, a satisfactory connection may be successfully established. In this context, "satisfactory" may be judged by reference to factors such as signal strength at the local network, data capacity or other available services, cost or other factors. A connection is not established until the whole of the process has been completed for allowing communication in the system, including the steps which involve the home network. In particular, contact with a local network, which does not lead to the device being able to communicate in the system, is not an established connection.

If a satisfactory connection is not possible, there may be several reasons for this. There may be a network failure in the local network specified in the current IMSI/network combination being attempted. The device 35 can then move to the next preference in the list, to try an alternative combination. (In this case, no combination which uses the failed network would be successful). Alternatively, a satisfactory connection may be impossible because of a problem with the home network associated with the IMSI being used, or between the local network and the home network. Interaction with the home network (in particular, the HLR) is used as part of the process of establishing a connection, as described above and consequently, if any relevant part of the home network has failed, no satisfactory connection will be possible, even if the local network is functioning satisfactorily. Again, the device 35 will then move to the next preference in the list, to try an alternative combination. It is for this reason that groups of entries in the table include more than one IMSI, so that in the event of a failure in the home network associated with one IMSI, another entry in the group will specify an alternative IMSI (in association with the same or an alternative local network) and allow a connection to be established by using the alternative home network, thereby circumventing any problem arising from the failure of the first home network. Desirably, the home network of the alternative IMSI is wholly independent (at a technical level) from the home network of the first IMSI.

Consequently, the device is able to use an alternative home network (through an alternative IMSI) if a first home network fails for any reason. This improves reliability by providing access to more than one set of infrastructure which are functionally independent of each other. Since they are functionally independent, they are likely to be economically independent. It is therefore envisaged that the financial arrangements between a user and the multiple home networks may be through a financial intermediary, so that the user experiences centralised billing, regardless of which home network is used. For these or other reasons, it may be desirable for the table to define, for each IMSI, which Service Provider Name (SPN) is displayed to the user, if any. The Access Point Name (APN) may also be defined for each IMSI.

It is possible that for technical or commercial reasons, there may be countries for which only a single IMSI is allowable.

The order of preferences of IMSI or IMSI/network combinations in the table of selection data can be chosen in accordance with various factors. In particular, it is envisaged that the order may be chosen with reference to cost. Alternatively, the order may be chosen with reference to the services available. Both of these factors will be governed by roaming agreements between the local networks and the home networks. It should be borne in mind that each entry in the table of selection data can specify a different combination of a subscriber identity and a network, and the combination can be formed from more than one subscriber identity and more than one network, arranged in any order. For example, the cheapest option available to a subscriber in a particular country may be IMSI 1 and local network 1. If this option is not available, the next cheapest option may be IMSI 1 and local network 2, or may be IMSI 2 and local network 1 or another local network. The third option may again make use of IMSI 1 or may make use of IMSI 2. It can therefore be seen that there is complete flexibility for changing the IMSI or changing the network or changing both, when stepping from one entry to the next. The table may specify IMSIs in a preferred order, or combinations of IMSI and network in a preferred order. Combinations may be formed from more than one IMSI and/or more than one network, such as combinations of one IMSI with each of a plurality of networks, or one network with each of a plurality of IMSIs, or combinations drawn from several IMSIs and several networks. This is expected to improve reliability of communication by circumventing problems arising from local network failure or from home network failure, while retaining control on charging arrangements, to encourage least cost routing.

Since the home countries of the various home networks may be the current country or another country, and since the specified local network may be different to the home network, even in the home country of the home network, the status of the device as roaming or not roaming may change as the preferences are used in order, even at a single geographical location.

In some examples, one or more table entry may designate a network as being not for use, so that its use is blocked. This may be for technical or commercial reasons. One or more table entries may include a parameter to define functionality which must, can or must not be used. For example, data or other services may be blocked or allowed, maximum or minimum network standards (2G, 3G etc.) may be defined, or addresses (URLs or IP addresses) may be permitted or blocked when using the internet or another computer network.

In some examples, the user interface 54 may be used to control or change the contents of the table 56. The validity of the table may be time-limited and therefore require refreshing periodically, either manually or automatically. The contents of the table may be maintained by updates sent to the device, for example by using over-the-air (OTA) programming or another mechanism.

Changes which have been made as different table entries are used to establish connections may be recorded, for viewing by the user and/or for reporting back to a home network.

Many variations and modifications can be made to the examples described above. Many aspects can be implemented in various ways, using a range of hardware, software and other technologies.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A subscriber identity module for use in operating a mobile telecommunications device in a telecommunications system to establish a connection for communication through the system, the system including a plurality of wireless networks, and the device being operable to establish a connection by means of a network locally available to the device and by using a subscriber identity stored in the subscriber identity module to identify the device user and the home network of the device, wherein the subscriber identity module contains a table of selection data, the table having a plurality of entries and the entries having a preferred order, and each entry including at least a subscriber identity, and wherein the module is operable to provide selection data to the device to establish a connection by:
reading a table entry to identify selection data which includes a subscriber identity specified in the table entry and which includes a local network if a local network is specified in the table entry;
providing the selection data to the device for the device to establish a connection using the specified subscriber identity and, if any, the specified local network, and any available local network if no local network is specified;
and in response to the device determining that a satisfactory connection is not available, reading the next most preferred table entry to obtain alternative selection data as aforesaid, and providing the alternative selection data to the device;
and wherein the table comprises at least one group of entries for use when the device is located in a country corresponding to the group, the group including at least a first entry which specifies a first subscriber identity from a first home network, and a second entry which specifies a second subscriber identity from a second home network.

2. A module according to claim 1, wherein the table comprises a plurality of groups of entries for use when the device is located in respective ones of a corresponding plurality of countries.

3. A module according to claim 1 or 2, the table comprising at least one group corresponding to a roaming country which is not the home country for at least one subscriber identity available for use by the device.

4. A module according to any preceding claim, the table comprising at least one group includes a first entry which specifies a first subscriber identity from a first home network outside the corresponding country and a second subscriber identity from a second home network outside the corresponding country.

5. A module according to any preceding claim, wherein at least one table entry includes at least one parameter defining functionality which must, can or must not be used when a connection is established on the basis of that entry.

6. A module according to claim 5, wherein the parameter or parameters define services to be available or blocked, and/or network standards to be used or not used, and/or addresses which are to be permitted or blocked during use.

7. A module according to any preceding claim, operable to modify the table of selection data in accordance with data transmitted to the device.

8. A module according to claim 7, wherein the data is transmitted to the device by OTA programming.

9. A method of operating a mobile telecommunications device in a telecommunications system to establish a connection for communication through the system, the system including a plurality of wireless networks, and the device being operable to establish a connection by means of a network locally available to the device and by using a subscriber identity to identify the device user and a home network for the device, wherein a table of selection data is stored on the device, the table having a plurality of entries and the entries having a preferred order, and each entry including at least a subscriber identity, and wherein the device is operable, in the absence of a connection, to attempt to establish a connection by:
reading a table entry to identify selection data which includes a subscriber identity specified in the table entry and which includes a local network if a local network is specified in the table entry;
attempting to establish a connection using the specified subscriber identity and, if any, the specified local network, and any available local network if no local network is specified;
determining if a satisfactory connection is available and if so, maintaining the connection and if not, reading the next most preferred table entry to obtain alternative selection data as aforesaid, and attempting to establish a connection using the alternative selection data;
and wherein the table comprises at least one group of entries for use when the device is located in a country corresponding to the group, the group including at least a first entry which specifies a first subscriber identity from a first home network, and a second entry which specifies a second subscriber identity from a second home network.

10. A method according to claim 9, wherein the table comprises a plurality of groups of entries for use when the device is located in respective ones of a corresponding plurality of countries.

11. A method according to claim 9 or 10, the table comprising at least one group corresponding to a roaming country which is not the home country for at least one subscriber identity available for use by the device.

12. A method according to any of claims 9 to 11, the table comprising at least one group includes a first entry which specifies a first subscriber identity from a first home network outside the corresponding country and a second subscriber identity from a second home network outside the corresponding country.

13. A method according to any of claims 9 to 12, wherein a satisfactory connection is determined as meeting a minimum performance standard.

14. A method according to any of claims 9 to 13, wherein a network is not designated as locally available unless a minimum threshold of a parameter for measuring quality is met for communication between the device and the local network.

15. A method according to any of claims 9 to 14, wherein once a connection has been established, the current connection continues to be used for a minimum period.

16. A method according to claim 15, wherein after the minimum period has elapsed, the current connection is reassessed and the table of selection data used to establish an alternative connection in the event that a connection is determined to be unsatisfactory when reassessed and/or in the event that a connection is available on the basis of a more preferred table entry than the current connection.

17. A method according to any of claims 9 to 16, wherein the locally available network providing the highest quality connection is used when a table entry does not specify a local network to be used.

18. A method according to any of claims 9 to 17, wherein at least one table entry includes at least one parameter defining functionality which must, can or must not be used when a connection is established on the basis of that entry.

19. A method according to claim 18, wherein the parameter or parameters define services to be available or blocked, and/or network standards to be used or not used, and/or addresses which are to be permitted or blocked during use.

20. A method according to any of claims 9 to 19, comprising the step of modifying the table of selection data in accordance with data transmitted to the device.

21. A method according to claim 20, wherein the data is transmitted to the device by OTA programming.

22. Software which, when installed on a mobile telecommunications device, is operable to cause the device to operate according to the method of any of claims 9 to 21.
